# EUROPÄISCHE PATENTSCHRIFT

(11) **EP 3 538 823 B1**
(45) Veröffentlichungstag und Bekanntmachung des Hinweises auf die Patenterteilung: **02.12.2020**
(21) Anmeldenummer: 17798127.1
(22) Anmeldetag: 26.10.2017
(51) Int. Cl.: F24S 40/52, F24S 20/20

(54) **RECEIVER MIT ABSORBERMODULEN**
RECEIVER HAVING ABSORBER MODULES
RÉCEPTEUR DOTÉ DE MODULES ABSORBEURS

(30) Priorität: 11.11.2016 DE 102016121654
(43) Veröffentlichungstag der Anmeldung: 18.09.2019
(73) Patentinhaber: Kraftanlagen München GmbH, 80339 München (DE)
(72) Erfinder: TRAUTNER, Johannes, 91448 Emskirchen (DE)
(74) Vertreter: advotec.
(86) Internationale Anmeldenummer: PCT/EP2017/077509
(87) Internationale Veröffentlichungsnummer: WO 2018/086910

(56) Entgegenhaltungen:
- EP-B1- 2 699 722
- DE-A1-102010 037 206
- DE-A1-102010 046 831
- DE-A1-102013 221 889

## Beschreibung

Die vorliegende Erfindung betrifft einen Receiver für Solarenergiegewinnungsanlagen nach dem Oberbegriff von Anspruch 1.

In der Druckschrift DE 197 44 541 C2 ist ein Solarempfänger beschrieben, der mehrere Absorbermodule aufweist. Die Absorbermodule enthalten jeweils einen porösen Absorberkörper, der der einfallenden Solarstrahlung zugewandt ist. Durch den Absorberkörper hindurch wird Luft angesaugt, die sich beim Durchströmen des Absorberkörpers erwärmt.

Der Receiver eignet sich für große Energiegewinnungsanlagen, bei denen beispielsweise zahlreiche Heliostate auf einem Feld verteilt angeordnet sind, die Solarstrahlung auf den Receiver reflektieren. An dem Receiver entsteht somit eine hohe Strahlungskonzentration, wodurch sich am Absorbermodul Temperaturen im Bereich von bis zu 1100 °C ergeben. Bei dem vorbekannten Solarempfänger ist eine Tragstruktur vorgesehen, welche zahlreiche Absorbermodule trägt. Jedes Absorbermodul besteht aus einem Absorberkopf und einem von dem Absorberkopf gehalten Absorberkörper. An den Absorberkörper schließt sich ein Heißluftkanal an. Die erzeugte Heißluft wird beispielsweise für den Betrieb von Arbeitsmaschinen wie z.B. Turbinen für Stromgeneratoren benutzt und kühlt sich dabei ab, enthält jedoch noch Restwärme bzw. hat gegenüber der Umgebungstemperatur eine nutzbare Temperaturdifferenz.

Zur Nutzung dieser Restwärme bzw. nutzbaren Temperaturdifferenz wird die Luft zum Solarempfänger zurückgeführt und ein Teil der Luft an den Wänden der Heißluftkanäle entlang geführt, um diese zu kühlen. Die Rückführluft strömt zwischen den Absorbermodulen hindurch, um an der Frontseite nach vorne hin auszutreten. Sie wird anschließend zusammen mit der Umgebungsluft wieder in den Absorberkörper eingesaugt.

Die auf den Receiver konzentrierte Solarstrahlung ist normalerweise nicht homogen verteilt. Vielmehr hat die Strahlungsflussdichte näherungsweise die Form einer Gauß-Verteilung.

Jedem Absorbermodul ist eine den Heißluftmassenstrom drosselnde Blende zugeordnet, mittels der der Heißluftmassenstrom der Strahlungsflussdichte angepasst ist. Dadurch ist an jedem Absorbermodul das Luftmassenstromverhältnis des durch das Absorbermodul strömenden Luftmassenstroms der Prozessluft relativ zu den Luftmassenströmen durch die anderen Absorbermodule eingestellt, wodurch eine optimierte Massenstromverteilung der aus den Absorbermodulen strömenden Heißluftströme erreicht wird.

Zusätzlich werden die Absorbermodule auch von der Rückführluft umströmt und damit gekühlt. Die Temperatur der Absorbermodule hängt somit auch von der Temperatur und dem Massenstrom der Rückführluft ab. Deswegen wird der Massenstrom der Rückführluft für jedes Modul einzeln eingestellt und damit die Massenstrom- und Temperaturverteilung der Absorbermodule weiter optimiert.

Durch die entlang der Absorber strömende Rückführluft wird nicht nur die Temperatur der Absorbermodule beeinflusst, sondern auch die Temperaturverteilung der Tragstruktur festgelegt. Durch eine individuelle Einstellung dieses Massenstroms wird sichergestellt, dass stark thermisch belastet Bereiche dieser Struktur ausreichend gekühlt werden, und somit eine thermische Überbeanspruchung ausgeschlossen ist, und beispielsweise eine zusätzliche Kühlung oder der Einsatz von hochtemperaturfesten Werkstoffen unnötig ist.

Um zum einen die Mindestkühlung der Tragstruktur sicherzustellen und zum anderen den Wärmeverlust zwischen den beiden Luftströmen möglichst gering zu halten, ist eine sehr genaue Einstellung des Rückführmassenstroms notwendig. Des Weiteren muss die Menge an Heiß- und Rückführluft für jedes einzelne Absorbermodul passend abgestimmt werden, um eine möglichst gute Wiedereinsaugung der Rückführluft sicherzustellen. Somit wird eine möglichst hohe Rückgewinnung der Restwärme der Rückführluft erreicht und der Wirkungsgrad der Solarenergiegewinnungsanlage maximiert.

Aus der Druckschrift DE 10 2010 046 831 A1 ist ein Receivermodul einer Solarenergiegewinnungsanlage mit einer Tragstruktur bekannt, die einen Hohlraum umfasst und mehrere Absorbermodule trägt. Die Absorbermodule umfassen jeweils ein Heißluftrohr, das innerhalb des Hohlraums von einem Kühlmantel derart umgeben ist, dass zwischen dem Heißluftrohr und dem Kühlmantel ein Ringraum ausgebildet ist, durch welchen Rückführluft an die Receivervorderseite strömt.

Der Erfindung liegt die Aufgabe zugrunde einen Receiver der einleitend genannten Art mit einer konstruktiv einfach umsetzbaren Möglichkeit der Einstellung des Rückführmassenstroms zu schaffen.

Diese Aufgabe ist erfindungsgemäß durch den Receiver mit den Merkmalen des Patentanspruchs 1 gelöst.

Der erfindungsgemäße Receiver für Solarenergiegewinnungsanlagen weist eine Tragstruktur auf, die Absorbermodule trägt. Die Absorbermodule enthalten jeweils einen frontseitigen Absorberkörper, an welchen sich ein Heißluftkanal anschließt. Die einzelnen Absorber werden jeweils mit Prozessluft durchströmt, die als Wärmeträgermedium einem Verbraucher zugeführt wird. Nach dem Verbraucher wird die abgekühlte Prozessluft als sogenannte Rückführluft über ein Luftrückführungssystem dem Receiver wieder zumindest teilweise zugeführt. Innerhalb der Tragstruktur wird diese Rückführluft ohne Vermischung mit der Heißluft auf die einzelnen Absorber aufgeteilt. Sie strömt in Rückführluftkanälen entlang dem Halterohr und dem Absorber vor den Absorberkörper. Die Erfindung ist dadurch gekennzeichnet, dass in den Rückführluftkanälen einzelner oder aller Absorbermodule jeweils mindestens eine den Rückluftmassenstrom drosselnde Blende angeordnet ist, die den Massenstrom der Rückführluft des betreffenden Absorbers bestimmt, wobei die Rückführluftblende über eine lösbare Verbindung in dem Ringspalt befestigt ist und mindestens einen Haltering umfasst, der an dem betreffenden Leitrohr und/oder dem betreffenden Halterohr fixiert ist.

Durch den erfindungsgemäßen Einsatz gleicher oder auch verschiedener Rückführluftblenden in mindestens einem der den Absorbermodulen zugeordneten Ringspalte kann das Verhältnis der Massenströme in den Ringspalten eingestellt werden.

Über die Rückführluftblenden kann das Verhältnis der Massenströme der Rückführluft der Absorbermodule untereinander eingestellt werden und die Kühlung jener Module und der Receiverstruktur an die Verteilung der Strahlungsleistung angepasst werden. Gleichzeitig wird der interne Wärmeverlust zwischen Heiß- und Rückführluft deutlich reduziert bei gleichzeitiger Gewährleistung der Mindestkühlung der Absorber und Tragstruktur. Des Weiteren wird hierüber der Rückführmassenstrom an den jeweiligen Heißluftmassenstrom des Absorbers angepasst und eine optimale Rückführung der Luft erreicht. Damit wird ein maximaler Wirkungsgrad der Solarenergiegewinnungsanlage gewährleistet.

Die Blenden werden anhand der hauptsächlich vorliegenden Strahlungsflussdichteverteilung und der Temperaturverteilung der Tragstruktur im Hauptlastfall ausgelegt und es wird eine deutlich verbesserte Verteilung für den größten Teil der Betriebszeit erreicht. Die Ausführung der Blenden als einfache Blechteile ist so gestaltet, dass die Strömungsfläche der Rückführluft von kaum bis sehr stark verkleinert wird und sich dadurch ein großer Einstellbereich ergibt.

Durch eine asymmetrische Gestaltung der Blenden kann sogar eine richtungsabhängige Strömungsdrosselung erfolgen. Diese Richtungsabhängigkeit der Drosselung ist notwendig, wenn die Strömung vor der Blende nicht symmetrisch ausgebildet ist und nach der Blende ein möglichst gleichmäßiges Strömungsprofil gefordert ist. Des Weiteren kann über die Kombination zweier Blenden die Variationsmöglichkeit der Massenstromeinstellung deutlich erweitert werden.

Ein weiteres wesentliches Merkmal der beschriebenen Blenden ist die einfache Montage und Austauschbarkeit, da der Ringspalt zwischen dem Heißluftrohr und dem Leitrohr einseitig von außen gut zugänglich ist und die Blenden in diesen Spalt über eine einfach lösbare Verbindung befestigt sind. Durch die gute Zugänglichkeit ergibt sich die Möglichkeit, diese Drosselbauteile erst nach dem Einbau des Receivers in einem Turm der Solargewinnungsanlage zu montieren, und damit die Fehleranfälligkeit der Montage deutlich zu reduzieren, da der Aufwand einer sicheren Zuordnung der Blenden deutlich niedriger ist. Weiterhin ist es bei einer solchen Ausführung der Drosselelemente möglich, im Rahmen einer Wartung alle oder nur einen Teil der Blenden zu tauschen, ohne wesentliche Teile des Receivers demontieren zu müssen. Eine schnelle Anpassung der einzelnen Massenströme der Rückführluft anhand von Betriebserfahrungen ist damit möglich.

Die erfindungsgemäße Blende kann als durchbrochener Ring ausgeführt sein, der zum Großteil innerhalb des Ringspaltes zwischen dem Heißluftrohr und dem Leitrohr positioniert ist. Sie kann aber auch so ausgeführt sein, dass sich ein Großteil der Blende in Form eines Halterings außerhalb des Leitrohres befindet und der Rückführmassenstrom nur durch kleine Störflächen, die innerhalb des Ringspaltes positioniert sind und von Blendenelementen gebildet sind, geregelt wird. Des Weiteren können diese beiden beschriebenen Ausführungsvarianten auch asymmetrisch ausgebildet sein.

Weitere Vorteile und vorteilhafte Ausführungsformen ergeben sich aus der Beschreibung, der Zeichnung und den Patentansprüchen.

Ausführungsbeispiele eines Receivers nach der Erfindung sind in der Zeichnung schematisch vereinfacht dargestellt und werden nachfolgend unter Bezugnahme auf die Zeichnung näher erläutert. Es zeigt:
- Fig. 1: eine schematische Ansicht einer Solarenergiegewinnungsanlage mit einem erfindungsgemäßen Receiver,
- Fig. 2: eine schematisch Ansicht eines von mehreren Receivermodulen, aus denen im Wesentlichen eine Tragstruktur und eine Luftführung des erfindungsgemäßen Receivers besteht,
- Fig. 3: einen schematischen Längsschnitt durch das Receivermodul mit drei Absorbermodulen und Rückführluftblenden sowie Details C und D;
- Fig. 4: eine erste Ausführungsform einer Rückführluftblende;
- Fig. 5: eine zweite Ausführungsform einer Rückführluftblende; und
- Fig. 6: eine dritte Ausführungsform einer Rückführluftblende;

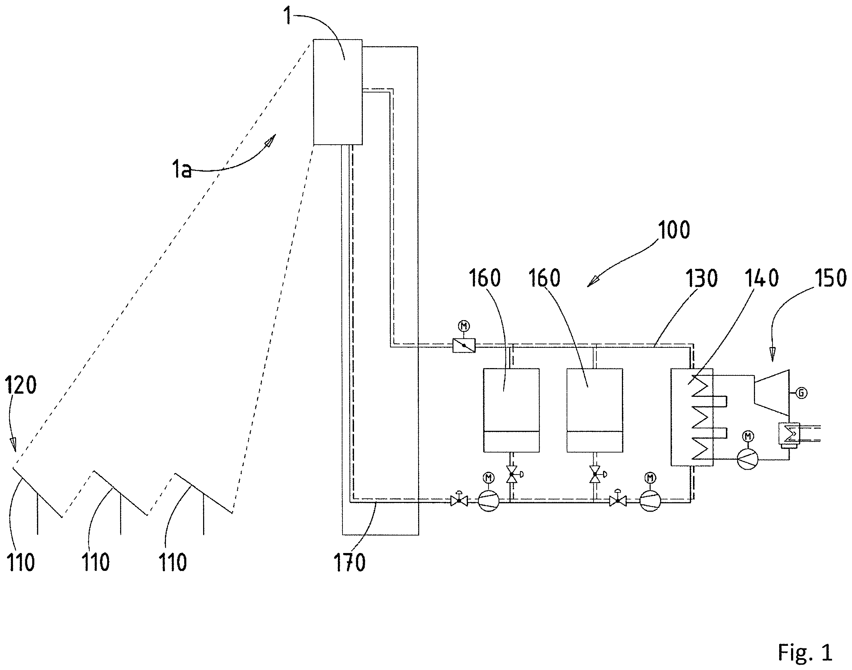

In Fig. 1 ist eine Solarenergiegewinnungsanlage 100 schematisch vereinfacht dargestellt. Sonnenlicht wird über die Heliostaten 110 eines Heliostatfeldes 120 auf den erfindungsgemäßen Receiver 1 reflektiert. Der Receiver 1 ist als offener volumetrischer Receiver ausgeführt, wobei Luft aus dem Bereich vor der Frontseite 1a des Receivers angesaugt wird und die Prozessluft bildet. Die Prozessluft wird vom Receiver 1 erhitzt und über Heißluftleitungen 130 einem Verbraucher zugeführt. Der Verbraucher kann beispielsweise ein Dampferzeuger 140 mit einem herkömmlichen Wasserdampfkreislauf 150 oder Wärmespeicher 160 sein. Des Weiteren kann die erhitzte Prozessluft als Prozesswärme genutzt werden, um beispielsweise Wasserstoff darzustellen. Über ein Luftrückführungssystem 170 wird die abgekühlte Prozessluft dem Receiver 1 zugeführt. Dort wird sie vollständig oder nur teilweise zur Kühlung des Receivers verwendet und abschließend vor die Frontseite 1a geführt und dort größtenteils wieder als Prozessluft angesaugt.

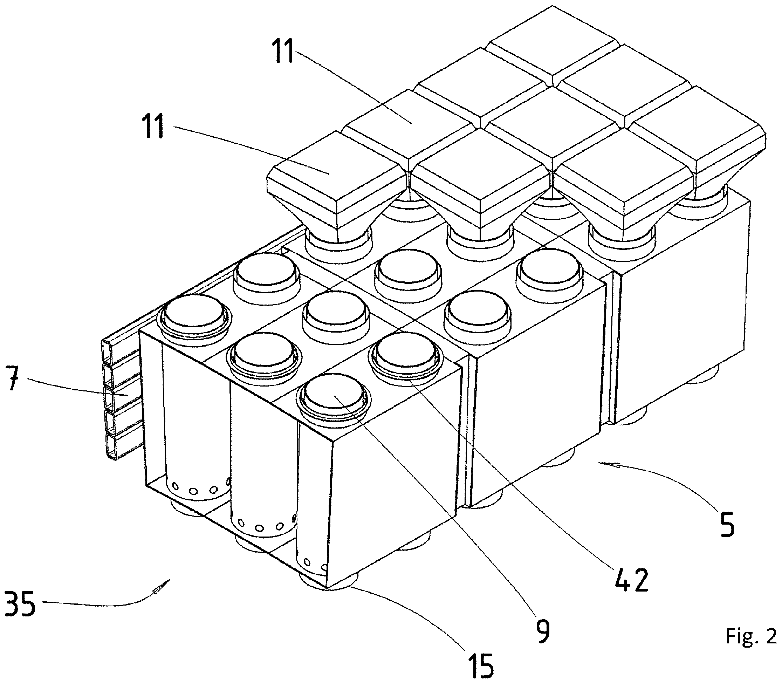

In Fig. 2 ist ein Receivermodul 5 schematisch vereinfacht dargestellt. Solche Receivermodule sind sowohl wesentlicher Teil einer Tragstruktur des erfindungsgemäßen Receivers 1, als auch Hauptbestandteil der receiverinteren Luftführung. Das Receivermodul 5 hat an einer Frontseite mehrere Löcher 9, in die Absorbermodule 11 eingesteckt sind. An der Rückseite (in Fig. 2 unten) des Receivermoduls 5 befinden sich Auslässe 15 für die Heißluft, die in Verbindung mit den Absorbermodulen 11 stehen. Die Rückführluft 35 wird seitlich dem Receivermodul 5 zugeführt und gleichmäßig verteilt zwischen den Absorbermodulen 11 vor die Frontseite des Receivermoduls 5 ausgeblasen.

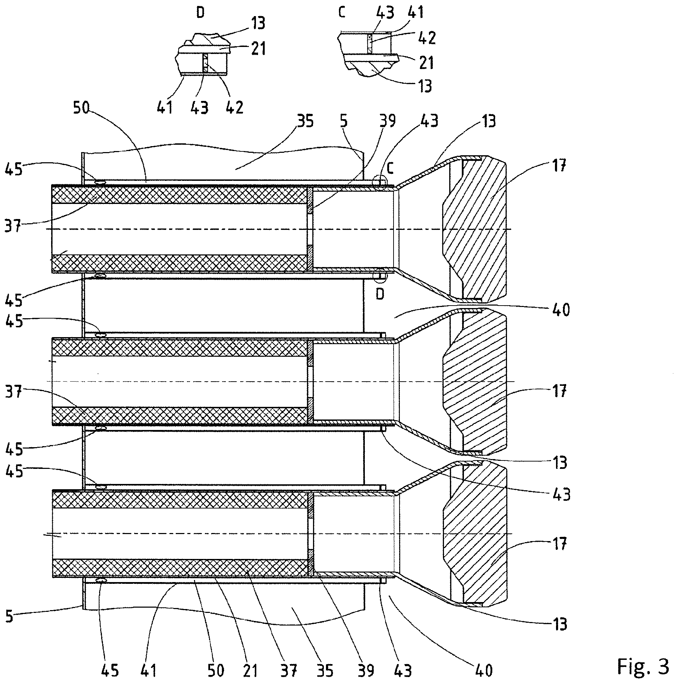

In Fig. 3 ist ein Receivermodul des erfindungsgemäßen Receivers inklusive dreier Absorbermodule 11 im Schnitt dargestellt. Wie ersichtlich ist, besteht ein Absorbermodul 11 aus einem kelchförmigen Absorberkörper 13, der einen Absorberkopf 17 hält. Der Absorberkörper 13 mündet in einen Heißluftkanal, wobei durch unterschiedlich ausgeführte Heißluftblenden 39 die Massenströme eines jeden einzelnen Absorbermoduls 11 im Verhältnis zu anderen Absorbermassenströmen des Receivers 1 eingestellt werden. Der Absorberkörper 13 ist in ein Halterohr 21 eingesteckt und hierüber mit einer Tragstruktur 7 verbunden. Das Halterohr 21 ist über eine Isolierung 37 gegenüber den Heißluftkanal wärmeisoliert.

Mit der Rückführluft 35 aus dem Luftrückführungssystem 170 werden sowohl die

Tragstruktur 7 als auch die Leitrohre 41 gekühlt. Um auch bei den Halterohren 21 eine thermische Überlastung zu vermeiden, strömt über Strömungskanäle 45 in den Leitrohren 41 ein Teil der Rückführluft in einen Ringspalt zwischen dem jeweiligen Halterohr 21 und dem jeweiligen Leitrohr 41. Am Ende dieses Ringspaltes sitzt eine Rückführluftblende 43, die die im jeweiligen Ringspalt 50 fließende Luftmenge drosselt. Nach dem Passieren der Rückführluftblenden 43 gelangt die Luft in einen Zwischenraum 40 zwischen den Absorbern und strömt von dort weiter über Spalte zwischen den Absorberkörpern 13 vor die Frontseite 1a.

Der Druckverlust der Rückführblende 43 ist wesentlich größer als der der Strömungskanäle 45 in den Leitrohren. Dementsprechend wird der Massenstrom der Rückführluft, der durch den Spalt zwischen dem Halterohr 21 und dem Leitrohr 41 fließt und die Halterohre 21 und den Absorberkörper 13 kühlt, durch die Rückführluftblenden 43 bzw. durch deren freie Strömungsfläche 42 bestimmt.

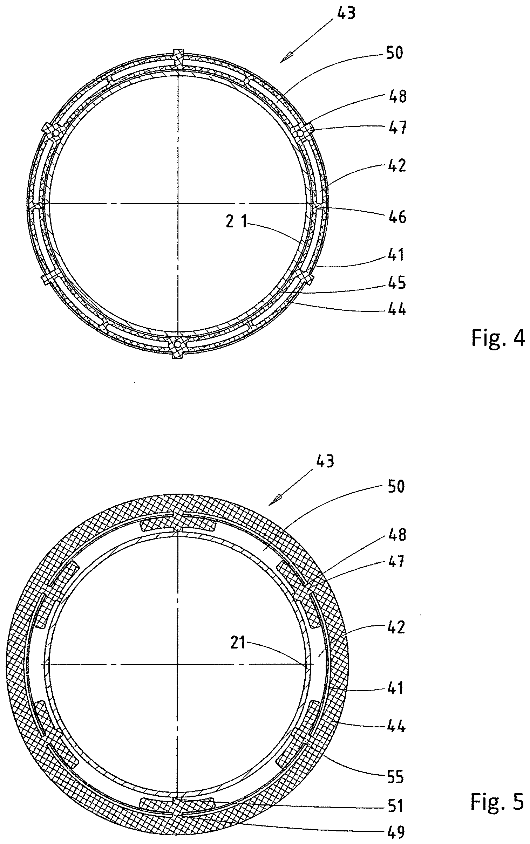

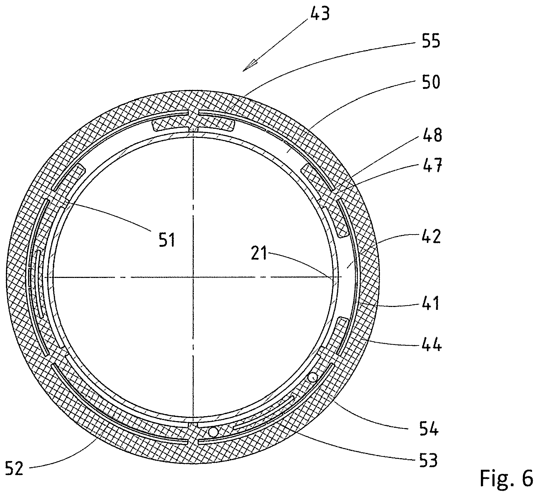

In den Figuren 4 bis 6 sind unterschiedliche Ausführungsbeispiele der Rückführluftblenden 43 als Draufsicht und in Einbauposition dargestellt. In den Figuren sind die jeweils gleichen Bauteile mit den gleichen Bezugszeichen versehen. Die Regelung des Rückführmassenstroms im Ringspalt 50 zwischen dem Leitrohr 41 und dem Halterohr 21 erfolgt entweder durch eine entsprechende große oder kleine freie Strömungsfläche 42 der Rückführluftblenden 43. Ist eine eher kleine Strömungsfläche 42 nötig, so kann, wie in Fig. 4 dargestellt, nahezu die gesamte Blende 43 innerhalb des Spaltes untergebracht werden. Ist dagegen eine große Strömungsfläche 42 notwendig, finden nur einzelne Störflächen bzw. Blendenelemente 55 der Blende 43 im Ringspalt Patz, die über einen Haltering 44 miteinander verbunden sind (siehe Fig. 5). Diese beiden beschrieben Varianten der Blenden 43 müssen nicht symmetrisch ausgeführt sein, sondern können auch eine deutliche Asymmetrie aufweisen. Diese Variante einer Rückführluftblende 43 ist in Fig. 6 dargestellt. Die asymmetrische Ausführung ist notwendig, wenn die Blende 43 nicht nur eine rein drosselnde Funktion besitzt, sondern auch das Profil der Strömung zwischen dem Halterohr 21 und dem Leitrohr 41 eingestellt werden soll. Dies ist notwendig, wenn die Zuführung der Luft in den Ringspalt 50 über die Stömungskanäle nicht gleichmäßig erfolgt, sondern z.B. aus einer Richtung deutlich stärker ausgeprägt ist. In diesem Fall muss die Strömung aus dieser Richtung erheblich stärker gedrosselt werden, um eine einheitliche Durchströmung des Ringspaltes 50 zu erreichen.

Des Weiteren ist es unter Umständen auch vorteilhaft, wenn die Warmluft nicht gleichmäßig ausströmt. Eine solche gewollte asymmetrische Strömung kann ebenfalls über die in Fig. 6 dargestellte Blende erfolgen.

Die in den Figuren 4 bis 6 dargestellten Ausführungsformen einer Rückführluftblende haben insbesondere folgenden Aufbau.

Die Rückführluftblende 43 gemäß Figur 4 umfasst einen Haltering 44, der in dem Ringspalt 50 zwischen dem Leitrohr 41 und dem Halterohr 21 angeordnet ist und der mit sechs Haltestegen 47 versehen ist, die jeweils in einen Fixierschlitz 48 eingreifen, der an dem Leitrohr 41 ausgebildet ist. Dadurch ist die Rückführluftblende 43 sicher an dem Leitrohr 41 gehalten.

Die in Figur 4 dargestellte Rückführluftblende 43 umfasst des Weiteren einen Innenring 45, der ebenfalls in dem Ringspalt zwischen dem Leitrohr 41 und dem Halterohr 21 angeordnet ist und der mit seiner inneren Ringfläche an dem Halterohr 21 anliegt. Der Innenring 45 ist über Verbindungsstege 46 mit dem Haltering 44 verbunden, die sich in radialer Richtung bezogen auf die Achse des Halterohrs 21 erstrecken. Durch den Haltering 44, den Innenring 45 und die Verbindungsstege 46 ist die freie Strömungsfläche 42 der Rückführluftblende 43 festgelegt bzw. sind bogenförmige Fenster definiert, die die freie Strömungsfläche 42 definieren. Der Haltering 44, der Innenring 45 und die Verbindungsstege sind in Anhängigkeit von der gewünschten freien Strömungsfläche 42 hinsichtlich ihrer Abmessungen auslegbar.

Die in Figur 5 dargestellte Ausführungsform einer Rückführluftblende 43 umfasst einen Haltering 44, der an der äußeren Umfangsfläche des Leitrohrs 41 anliegt und von dem in radialer Richtung nach innen Haltestege 47 abzweigen, die Halteschlitze 48 des Leitrohrs 41 durchgreifen. Die im vorliegenden Fall sechs Haltestege 47 gehen jeweils in dem Ringspalt zwischen dem Halterohr 21 und dem Leitrohr 41 in ein Blendenelement 55 über, das den Ringspalt 50 teilweise ausfüllt und einen bogenförmigen Grundriss hat. Die Blendenelemente 55 weisen jeweils einen Stützsteg 51 auf, der sich in radialer Richtung an der Umfangsfläche des Halterohrs 21 abstützt.

Die Blendenelemente 55 überdecken den Ringspalt 50 nur anteilig, so dass zwischen benachbarten Blendenelementen 55 und zwischen den einzelnen Blendenelementen 55 und dem Halterohr 21 eine freie Strömungsfläche 42 für die Rückführluft verbleibt. Je nach gewünschter freier Strömungsfläche 42 können die Blendenelemente 55 unterschiedliche Abmessungen haben.

In Figur 6 ist eine Ausführungsform einer Rückführluftblende 43 dargestellt, die einen äußeren Haltering 44 umfasst, der an der äußeren Umfangsfläche des Leitrohrs 41 anliegt und von dem in radialer Richtung nach innen Haltestege 47 abstehen, die Halteschlitze 48 des Leitrohrs 41 durchgreifen. Zwei der Haltestege 47 gehen innerhalb des Ringspalts 50 zwischen dem Leitrohr 41 und dem Halterohr 21 in Blendenelemente 55 über, die den Blendenelementen nach Figur 5 entsprechen. Die vier anderen Haltestege 47 gehen in einen Blendenteilring 52 über, der sich über einen Winkelbereich von etwa 170° erstreckt und sich an seiner Innenseite in radialer Richtung ebenfalls über Stützstege 51 an der Außenseite des Halterohrs 21 abstützt. Der Blendenteilring 52 ist mit Schlitzen 53 und/oder Bohrungen 54 versehen. Durch die Abmessungen der Blendenelemente 55 und des Blendenteilrings 52 ist die freie Strömungsfläche 42 festgelegt, die durch die Rückführluftblende 43 zur Verfügung gestellt werden kann.

## Patentansprüche

1. Receiver für eine Solarenergiegewinnungsanlage (100), umfassend eine Tragstruktur (7), die an einer Receivervorderseite mehrere Absorbermodule (11) trägt, die jeweils ein Halterohr (21) umfassen, das derart in ein Leitrohr (41) der Tragstruktur (7) eingreift, dass zwischen dem Halterohr (21) und dem Leitrohr (41) ein Ringspalt (50) ausgebildet ist, durch den im Betrieb zur Kühlung der Tragstruktur (7) und/oder des betreffenden Absorbermoduls (11) Rückführluft an die Receivervorderseite strömt, **dadurch gekennzeichnet, dass** in mindestens einem der Ringspalte (50) mindestens eine drosselnde Rückführluftblende (43) angeordnet ist, die einen Massenstrom der Rückführluft definiert, der durch den betreffenden Ringspalt (50) an die Receivervorderseite strömt, und wobei die Rückführluftblende (43) über eine lösbare Verbindung in dem Ringspalt (50) befestigt ist und mindestens einen Haltering (44) umfasst, der an dem betreffenden Leitrohr (41) und/oder dem betreffenden Halterohr (21) fixiert ist.

2. Receiver nach Anspruch 1, **dadurch gekennzeichnet, dass** der Haltering (44) innerhalb des Ringspalts (50) angeordnet ist.

3. Receiver nach Anspruch 1 oder 2, **dadurch gekennzeichnet, dass** der Haltering (44) das Leitrohr (41) umschließt.

4. Receiver nach einem der Ansprüche 1 bis 3, **dadurch gekennzeichnet, dass** die Rückführluftblende (43) einen Innenring (45) hat, der innerhalb des Ringspalts (50) zwischen dem Halterohr (21) und dem Leitrohr (41) angeordnet ist und über mindestens einen Verbindungssteg (46) mit dem Haltering (44) verbunden ist.

5. Receiver nach einem der Ansprüche 1 bis 4, **dadurch gekennzeichnet, dass** von dem Haltering (44) in radialer Richtung mindestens ein Haltesteg (47) vorsteht, der in einen Fixierschlitz (48) des Leitrohrs (41) eingreift.

6. Receiver nach einem der Ansprüche 1 bis 5, **dadurch gekennzeichnet, dass** die Rückführluftblende (43) mindestens ein Blendenelement (55) umfasst, das den Ringspalt (50) teilweise ausfüllt.

7. Receiver nach Anspruch 6, **dadurch gekennzeichnet, dass** das Blendenelement (55) einen bogenförmigen Grundriss hat.

8. Receiver nach Anspruch 6 oder 7 in Verbindung mit einem der Ansprüche 2 bis 6, **dadurch gekennzeichnet, dass** das Blendenelement (55) über den Haltesteg (47) an den Haltering (44) angebunden ist.

9. Receiver nach einem der Ansprüche 6 bis 8, **dadurch gekennzeichnet, dass** das Blendenelement (55) mindestens einen Stützsteg (51) aufweist, der sich in radialer Richtung an dem Halterohr (21) abstützt.

10. Receiver nach einem der Ansprüche 1 bis 9, **dadurch gekennzeichnet, dass** in dem Ringspalt (50) mindestens zwei vorzugsweise baugleiche Rückführluftblenden (43) angeordnet sind, die in Umfangsrichtung zueinander verdreht sind.

## Claims

1. A receiver for a solar power plant (100), the receiver comprising a support structure (7) carrying a plurality of absorber modules (11) on a front side of the receiver, each absorber module comprising a retaining tube (21) which engages into a guide tube (41) of the support structure (7) in such a manner that an annular gap (50) is formed between the retaining tube (21) and the guide tube (41), recirculation air flowing to the front side of the receiver through said annular gap (50) during operation in order to cool the support structure (7) and/or the respective absorber module (11), **characterized in that** at least one throttling recirculation air orifice plate (43) is disposed in at least one of the annular gaps (50), said recirculation air orifice plate (43) defining a mass flow of the recirculation air, which flows through the respective annular gap (50) to the front side of the receiver, and the recirculation air orifice plate (43) being mounted in the annular gap (50) via a removable connection and comprising at least one retaining ring (44) which is fixed to the respective guide tube (41) and/or the respective retaining tube (21).

2. The receiver according to claim 1, **characterized in that** the retaining ring (44) is disposed within the annular gap (50).

3. The receiver according to claim 1 or 2, **characterized in that** the retaining ring (44) encloses the guide tube (41).

4. The receiver according to any one of claims 1 to 3, **characterized in that** the recirculation air orifice plate (43) has an inner ring (45) which is disposed within the annular gap (50) between the retaining tube (21) and the guide tube (41) and is connected to the retaining ring (44) via at least one connecting web (46).

5. The receiver according to any one of claims 1 to 4, **characterized in that** at least one retaining web (47), which engages into a fixing slot (48) of the guide tube (41), projects from the retaining ring (44) in the radial direction.

6. The receiver according to any one of claims 1 to 5, **characterized in that** the recirculation air orifice plate (43) comprises at least one orifice plate member (55) which fills the annular gap (50) partially.

7. The receiver according to claim 6, **characterized in that** the orifice plate member (55) has an arc-shaped layout.

8. The receiver according to claim 6 or 7 in combination with one of claims 2 to 6, **characterized in that** the orifice plate member (55) is connected to the retaining ring (44) via the retaining web (47).

9. The receiver according to any one of claims 6 to 8, **characterized in that** the orifice plate member (55) has at least one support web (51) which rests against the retaining tube (21) in the radial direction.

10. The receiver according to any one of claims 1 to 9, **characterized in that** at least two recirculation air orifice plates (43), which are preferably identical and which are rotated relative to each other in the circumferential direction, are disposed in the annular gap (50).

## Revendications

1. Récepteur pour une centrale solaire (100), le récepteur comprenant une structure de support (7) portant une pluralité de modules absorbeurs (11) sur une face avant du récepteur, chaque module absorbeur (11) comprenant un tube de fixation (21) qui vient en prise avec un tube de guidage (41) de la structure de support (7) de manière qu'un interstice annulaire (50) est formé entre le tube de fixation (21) et le tube de guidage (41), de l'air de recirculation circulant jusqu'à la face avant du récepteur à travers ledit interstice annulaire (50) pour refroidir la structure de support (7) et/ou le respectif module absorbeur (11) pendant le fonctionnement, **caractérisé en ce qu'**au moins une plaque à orifice (43) étranglante pour l'air de recirculation est disposée dans au moins un des interstices annulaires (50), ladite plaque à orifice (43) pour l'air de recirculation définissant un débit massique de l'air de recirculation, qui circule jusqu'à la face avant du récepteur à travers le respectif interstice annulaire (50), et la plaque à orifice (43) pour l'air de recirculation étant montée dans l'interstice annulaire (50) via une liaison amovible et ayant au moins une bague de fixation (44) qui est fixée au respectif tube de guidage (41) et/ou au respectif tube de fixation (21).

2. Récepteur selon la revendication 1, **caractérisé en ce que** la bague de fixation (44) est disposée à l'intérieur de l'interstice annulaire (50).

3. Récepteur selon la revendication 1 ou 2, **caractérisé en ce que** la bague de fixation (44) entoure le tube de guidage (41).

4. Récepteur selon l'une quelconque des revendications 1 à 3, **caractérisé en ce que** la plaque à orifice (43) pour l'air de recirculation a une bague intérieure (45) qui est disposée à l'intérieur de l'interstice annulaire (50) entre le tube de fixation (21) et le tube de guidage (41) et est reliée à la bague de fixation (44) via au moins une traverse de liaison (46).

5. Récepteur selon l'une quelconque des revendications 1 à 4, **caractérisé en ce qu'**au moins une traverse de fixation (47), qui vient en prise avec une fente de fixation (48) du tube de guidage (41), fait saillie de la bague de fixation (44) dans la direction radiale.

6. Récepteur selon l'une quelconque des revendications 1 à 5, **caractérisé en ce que** la plaque à orifice (43) pour l'air de recirculation comprend au moins un élément de plaque à orifice (55) qui remplit partiellement l'interstice annulaire (50).

7. Récepteur selon la revendication 6, **caractérisé en ce que** l'élément de plaque à orifice (55) a un plan en forme d'arc.

8. Récepteur selon la revendication 6 ou 7 en combinaison avec l'une quelconque des revendications 2 à 6, **caractérisé en ce que** l'élément de plaque à orifice (55) est relié à la bague de fixation (44) via la traverse de fixation (47).

9. Récepteur selon l'une quelconque des revendications 6 à 8, **caractérisé en ce que** l'élément de plaque à orifice (55) a au moins une traverse de support (51) qui s'appuie au tube de fixation (21) dans la direction radiale.

10. Récepteur selon l'une quelconque des revendications 1 à 9, **caractérisé en ce qu'**au moins deux plaques à orifice (43) pour l'air de recirculation, qui sont de préférence de construction identique et qui sont tournées l'une par rapport à l'autre dans la direction circonférentielle, sont disposées dans l'interstice annulaire (50).
